(19) **Europäisches Patentamt / European Patent Office / Office européen des brevets**

(11) **EP 2 997 654 B1**

(12) **FASCICULE DE BREVET EUROPEEN**

(45) Date de publication et mention
de la délivrance du brevet:
**28.06.2017 Bulletin 2017/26**

(21) Numéro de dépôt: **14731681.4**

(22) Date de dépôt: **12.05.2014**

(51) Int Cl.:
*H02P 6/18* (2016.01)    *H02P 21/13* (2006.01)
*H02P 21/18* (2016.01)

(86) Numéro de dépôt international:
**PCT/FR2014/051079**

(87) Numéro de publication internationale:
**WO 2014/184472 (20.11.2014 Gazette 2014/47)**

(54) **PROCÉDÉ D'ESTIMATION DE LA POSITION ANGULAIRE DU ROTOR D'UNE MACHINE ÉLECTRIQUE TOURNANTE POLYPHASÉE ET APPLICATION À LA COMMANDE D'UN ONDULEUR POLYPHASÉ POUR UNE TELLE MACHINE**

VERFAHREN ZUR SCHÄTZUNG DER WINKELPOSITION DES ROTORS EINER MEHRPHASIGEN ELEKTRISCHEN DREHMASCHINE UND ANWENDUNG ZUR STEUERUNG EINES MEHRPHASIGEN WECHSELRICHTERS FÜR SOLCH EINE MASCHINE

METHOD OF ESTIMATING THE ANGULAR POSITION OF THE ROTOR OF A POLYPHASE ROTATING ELECTRIC MACHINE AND APPLICATION TO THE CONTROL OF A POLYPHASE INVERTER FOR SUCH A MACHINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.05.2013 FR 1354239**

(43) Date de publication de la demande:
**23.03.2016 Bulletin 2016/12**

(73) Titulaire: **Valeo Equipements Electriques Moteur 94046 Créteil Cedex (FR)**

(72) Inventeurs:
• **DIAO, Sidath**
  **94100 Saint-Maur des fossés (FR)**
• **MAKNI, Zaatar**
  **91380 Chilly Mazarin (FR)**

(56) Documents cités:
• **CHEN J-L ET AL: "Design and implementation of a novel high-performance sensorless control system for interior permanent magnet synchronous motors", IET ELECTRIC POWER APPLICATIONS,, vol. 4, no. 4, 1 avril 2010 (2010-04-01), pages 226-240, XP006035176, ISSN: 1751-8679, DOI: 10.1049/IET-EPA:20090214**
• **SIDATH DIAO ET AL: "A differential algebraic approach for position/speed estimation in PMSM", 2013 INTERNATIONAL ELECTRIC MACHINES & DRIVES CONFERENCE, 12 mai 2013 (2013-05-12), - 15 mai 2013 (2013-05-15), pages 1149-1154, XP055078708, DOI: 10.1109/IEMDC.2013.6556304 ISBN: 978-1-46-734973-4**

**Description**

**DOMAINE TECHNIQUE DE L'INVENTION**

La présente invention concerne un procédé d'estimation de la position angulaire / vitesse de rotation du rotor d'une machine électrique tournante synchrone polyphasée et des procédés et dispositifs de commande pour un onduleur polyphasé destiné à alimenter à partir d'une source de tension continue une machine électrique tournante synchrone polyphasée.

L'invention concerne également une machine électrique tournante synchrone polyphasée comportant un onduleur intégré ces dispositifs ci-dessus, notamment pour des applications dans des véhicules automobiles.

**ARRIERE-PLAN TECHNOLOGIQUE DE L'INVENTION**

Les entraînements électriques deviennent de plus en plus présents dans le monde de l'automobile et remplissent de plus en plus de fonctions.

A cause de leur rendement élevé et de leur forte densité de puissance, on utilise le plus souvent dans l'industrie de l'automobile des machines synchrones.

Celles-ci sont utilisées notamment dans les véhicules électriques hybrides ("Hybrid Electrical Vehicle" ou HEV en terminologie anglaise) et les véhicules électriques ("Electrical Vehicle" ou EV), dans les directions à assistance électrique, les climatiseurs et les ventilateurs de refroidissement des moteurs thermiques.

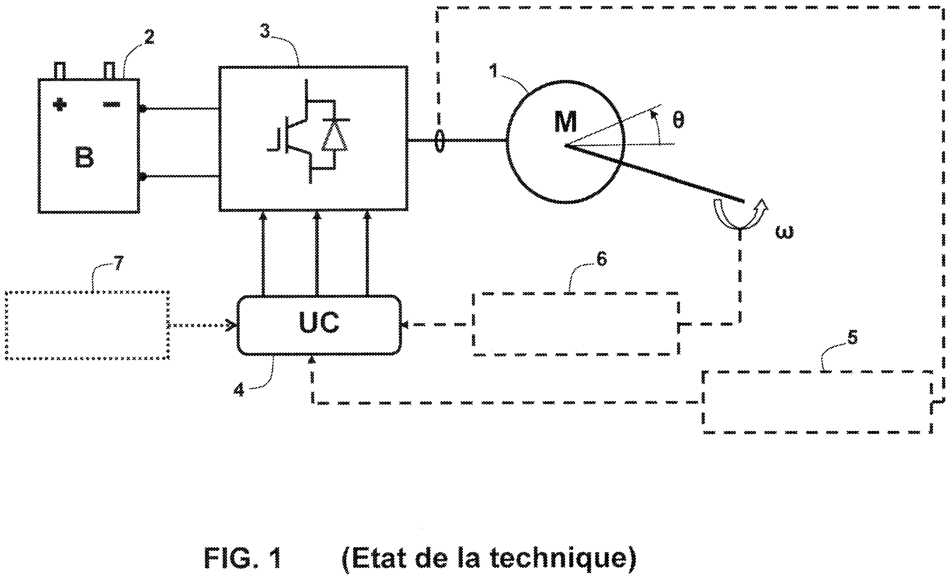

La **Figure 1** montre schématiquement un entraînement électrique avec une machine synchrone 1. Un tel système comprend en outre généralement:

- une source d'énergie constituée par une batterie 2;
- un convertisseur statique constitué par un onduleur 3;
- une unité de contrôle 4;

Un onduleur 3 de la puissance adéquate est requis pour générer les différentes tensions de phases d'amplitudes et de fréquences variables à partir de la batterie 2.

La machine synchrone effectue la conversion entre l'énergie électrique et l'énergie mécanique.

Comme l'indique la **Figure 1,** des capteurs de mesures (tension d'alimentation continue, courants de phases 5 et position angulaire/ vitesse de rotation 6) associés à une consigne 7 (couple ou vitesse) constituent les entrées de l'unité de contrôle 4 du système.

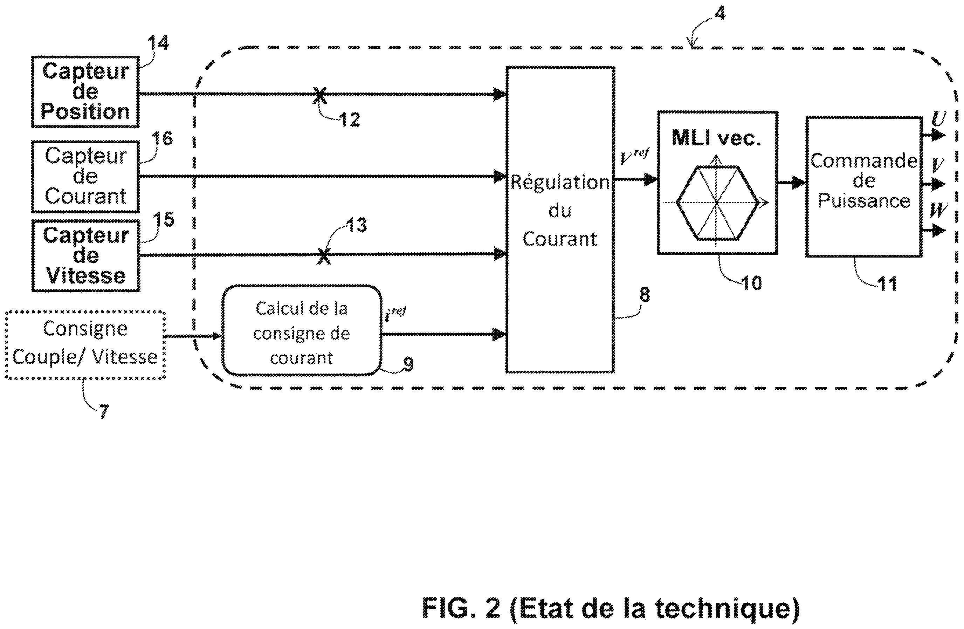

La **Figure 2** montre schématiquement, dans le cas d'une machine synchrone 1 triphasée, les principaux éléments de l'unité de contrôle 4 qui pilote l'électronique de puissance de l'onduleur 3 afin d'alimenter la machine 1 avec les tensions correctes correspondant aux consignes.

Le but de cette unité de contrôle 4 est de permettre un fonctionnement avec un bon rendement dans une large gamme de couples et de vitesses.

Pour ce faire, un contrôle en boucle fermée est nécessaire.

La régulation de courant 8 ("Current Control Loop" en terminologie anglaise, CCL) est une fonction de correction qui assure un bon asservissement des courants de phases mesurés à une référence de courant $i^{ref}$.

Un bloc de calcul de la référence de courant 9 donne $i^{ref}$ à partir de la consigne 7 couple/ vitesse et des paramètres électriques de la machine 1.

Il transforme une consigne mécanique en une consigne électrique.

Quand la tension de référence $V^{ref}$ a été calculée par le bloc de régulation de courant 8, un bloc de modulation de largeur d'impulsion vectorielle 10, ou bloc de MLI vectorielle, ("Space Vector Modulation" en terminologie anglaise, ou SVM) génère les rapports cycliques devant être appliqués sur les bras de l'onduleur 3 à partir des composantes de la tension de référence dans un repère de Clarke.

Ensuite, un bloc de commande de puissance 11 génère les signaux de commande *U, V, W* utilisés pour piloter l'onduleur 3.

En ce qui concerne la régulation de courant 8, puisque l'on travaille avec un système triphasé, la commande peut être analysée dans plusieurs repères.

La transformation de Clarke bien connue est une projection des grandeurs relatives aux trois phases sur deux axes fixes $(\alpha,\beta)$. Ensuite, la transformation de Clarke est suivie par une rotation des axes qui convertit les composantes alternatives du repère $(\alpha,\beta)$ en composantes continues selon un axe direct et un axe en quadrature (repère (d,q)) par rapport au flux magnétique produit par le rotor. La combinaison de la transformation de Clarke avec la rotation du repère $(\alpha,\beta)$ au repère (d,q) est connue sous le nom de transformation de Park.

Le principal avantage de ces transformations est la réduction de l'ordre du système et un découplage de la commande.

La commande de ce type de machines nécessite une information 6 de la position angulaire et/ou de la vitesse du rotor de la machine. De manière classique, l'information 6 de position / vitesse est obtenue par un ou deux capteurs de mesure, sachant cependant qu'un seul capteur de position angulaire peut généralement suffire compte-tenu que la vitesse de rotation peut être obtenue par calcul de la dérivée première par rapport au temps de la position angulaire.

Pour réduire le coût de la machine synchrone et de sa commande, il est connu par le document US5569994 de se passer de capteur(s) de position/vitesse pour commander la machine. Pour ce faire, les forces électromotrices (fem) générées par les différents bobinages de phases de la machine sont utilisées afin d'estimer la position du rotor. Toutefois, ce procédé selon US5569994 n'apporte pas de solution satisfaisante pour la mesure de la position angulaire du rotor à basse vitesse.

Quoi qu'il en soit, lorsqu'un fonctionnement sûr et précis de l'entraînement électrique est exigé, il est difficile de se passer du capteur position/ vitesse 14, 15 et l'unité de contrôle 4 doit être tolérante à une défaillance 12, 13 du capteur position/ vitesse 14, 15. Cela permet d'assurer un fonctionnement sans interruption et une conformité aux exigences de sécurité.

Actuellement, dans les applications les plus exigeantes, une redondance du matériel est utilisée pour surmonter une panne de capteur ce qui rend le système plus complexe et augmente son coût.

Concurremment, une redondance par logiciel est beaucoup plus intéressante grâce à sa capacité d'évolution en plus de son bas coût. Dans ce but, on réalise des "capteurs logiciels", tels qu'on les nomme habituellement.

Ils utilisent d'autres mesures disponibles, notamment celles fournies par des capteurs de courant, et d'autres données relatives à la commande pour reconstruire le signal manquant.

Par exemple, le document US7002318 décrit un procédé et un dispositif de commande à tolérance de panne d'un système de propulsion de véhicule. En cas de défaillance du capteur de la position angulaire du rotor du moteur électrique triphasé à aimants permanents, une estimation de la position est calculée en fonction des courants de phases et utilisée par le dispositif de commande. On notera cependant que ce document ne propose aucune solution satisfaisante pour une machine électrique tournante synchrone polyphasée. Un procédé d'estimation de la position angulaire du rotor d'une machine synchrone à aimants permanents est connu du document CHEN J-L ET AL: "Design and implementation of a novel high-performance sensorless control system for interior permanent magnet synchronous motors".

## DESCRIPTION GENERALE DE L'INVENTION

En vue d'applications très exigeantes dans le domaine très concurrentiel de l'automobile, le but de la présente invention est par conséquent de pallier les insuffisances des commandes de la technique antérieure pour des entraînements électriques faisant appel à une machine électrique tournante synchrone polyphasée.

Selon un premier aspect, l'invention concerne un procédé d'estimation de la position angulaire et/ou de la vitesse de rotation d'un rotor compris dans une machine électrique tournante synchrone polyphasée comprenant également un stator, la machine étant alimentée à travers un onduleur polyphasé relié à une source de tension continue, et l'onduleur polyphasé étant commandé de manière à être apte à appliquer sur le stator une modulation de largeur d'impulsion vectorielle. L'estimation de la position angulaire est obtenue en calculant au moins un premier estimateur en tant que solution d'une équation algébrique différentielle dont des coefficients dépendent de paramètres électriques de la machine comprenant des première et seconde inductances du stator respectivement selon un axe direct et un axe en quadrature par rapport à un flux magnétique produit par le rotor, une résistance d'un enroulement de phase et le flux magnétique produit par le rotor, et dépendent de plus d'une tension de référence de la modulation de largeur d'impulsion vectorielle, de courants de phases et de dérivées premières des courants de phases par rapport au temps; et l'estimation de la vitesse de rotation est obtenue en calculant un second estimateur obtenu par un calcul de dérivée première du premier estimateur par rapport au temps.

Conformément à l'invention, l'équation algébrique différentielle s'écrit dans le cas où la machine électrique tournante synchrone polyphasée est triphasée :

$$\begin{cases} \dot{\hat{\theta}} = \dfrac{\sin\hat{\theta}(L_q \dot{y}_1 + R_s y_1 - u_1) + \cos\hat{\theta}(-L_q \dot{y}_2 - R_s y_2 + u_2)}{\phi_m + (L_d - L_q)(y_1 \cos\hat{\theta} + y_2 \sin\hat{\theta})} \\ \hat{\omega} = \dot{\hat{\theta}} \end{cases}$$

où:

un opérateur de dérivation par rapport au temps est noté ;

$\hat{\theta}, \hat{\omega}$ représentent respectivement les premier et second estimateurs;

$u = [u_1, u_2] = [v_{s\alpha}, v_{s\beta}]$ représente des composantes de la tension de référence dans un repère de Clarke;

$y = [y_1, y_2] = [i_{s\alpha}, i_{s\beta}]$ représente des projections des courants de phases sur le repère de Clarke;

$L_d, L_d$ représentent respectivement les première et seconde inductances;

$R_s$ représente la résistance;

$\Phi_m$ représente le flux magnétique.

Selon une autre caractéristique du procédé, une valeur initiale du second estimateur est donnée par l'expression:

$$\theta_0 = \arctan\left(\frac{R_s y_2 + L_q \dot{y}_2 - u_2}{R_s y_1 + L_q \dot{y}_1 - u_1}\right)\Big|_{t=0}$$

Selon un second aspect, l'invention concerne un procédé de commande d'un onduleur polyphasé destiné à alimenter à partir d'une source de tension continue une machine électrique tournante synchrone polyphasée comprenant un rotor et un stator, le procédé étant du type de ceux commandant l'onduleur en fonction au moins d'une position angulaire du rotor et/ou d'une vitesse de rotation de celui-ci.

Conformément à l'invention, la position angulaire et/ou la vitesse de rotation sont estimées en calculant des premier et second estimateurs selon le procédé d'estimation décrit brièvement ci-dessus.

Selon un troisième aspect, l'invention concerne un procédé de commande à tolérance de panne d'un onduleur polyphasé destiné à alimenter à partir d'une source de tension continue une machine électrique tournante synchrone polyphasée comprenant un rotor, un stator, un capteur de position déterminant une position angulaire du rotor et un capteur de vitesse déterminant une vitesse de rotation du rotor, le procédé étant du type de ceux commandant l'onduleur en fonction au moins de la position angulaire et de la vitesse de rotation.

Conformément à l'invention, au moins un premier estimateur de la position angulaire et/ou un second estimateur de la vitesse de rotation sont calculés en cas de défaillance d'au moins un des capteurs, les premier et second estimateurs étant calculés au moyen du procédé décrit brièvement ci-dessus.

Selon un quatrième aspect, l'invention concerne un dispositif de commande à tolérance de panne d'un onduleur polyphasé destiné à alimenter à partir d'une source de tension continue une machine électrique tournante synchrone polyphasée, ce dispositif mettant en oeuvre le procédé de commande à tolérance de panne décrit brièvement ci-dessus, le dispositif comprenant un rotor, un stator, un capteur de position fournissant une position angulaire du rotor et/ou un capteur de vitesse fournissant une vitesse de rotation du rotor, du type de ceux comprenant:

- des premiers moyens d'acquisition de la position angulaire;
- des deuxièmes moyens d'acquisition de la vitesse de rotation;
- des troisièmes moyens d'acquisition de courants de phases;
- des moyens d'estimation d'un premier estimateur de la position et/ou d'un second estimateur de la vitesse de rotation établis selon le procédé brièvement ci-dessous.
- des moyens de détection d'une première défaillance du capteur de position et/ ou d'une seconde défaillance du capteur de vitesse; et
- des moyens de remplacement de la position angulaire par le premier estimateur et/ou de la vitesse de rotation par le second estimateur en cas de détection d'une première et/ou d'une seconde défaillance par les moyens de détection.

Selon une autre caractéristique, le dispositif de commande à tolérance de panne comporte des moyens d'estimation qui comprennent:

- des moyens de mémorisation de paramètres électriques de la machine;
- des moyens de résolution d'une équation algébrique différentielle du premier estimateur; et

- des moyens de différentiation du premier estimateur.

Selon encore une autre caractéristique, le dispositif de commande à tolérance de panne comporte également :

- un régulateur de courant générant une tension de référence en fonction d'une consigne de courant en étant relié aux premiers, deuxièmes et troisièmes moyens d'acquisition ou, alternativement, aux moyens de remplacement et aux troisièmes moyens d'acquisition; et
- un générateur de signaux commandé par le régulateur de courant et implémentant une stratégie de modulation en largeur d'impulsion vectorielle.

Selon un autre aspect, l'invention concerne également une machine électrique tournante synchrone polyphasée comportant un onduleur muni du dispositif de commande à tolérance de panne tel que décrit brièvement ci-dessus.

Selon un autre aspect, l'invention concerne également une mémoire informatique qui comporte des codes informatiques représentatifs des procédés de commande d'un onduleur polyphasé tel que décrit brièvement ci-dessus.

Ces quelques spécifications auront rendu évidents pour l'homme de métier les avantages apportés par les procédés de commande d'un onduleur polyphasé selon l'invention, ainsi que par le dispositif de commande et la machine électrique correspondants, par rapport à l'état de la technique antérieur.

Les spécifications détaillées de l'invention sont données dans la description qui suit en liaison avec les dessins ci-annexés. Il est à noter que ces dessins n'ont d'autre but que d'illustrer le texte de la description et ne constituent en aucune sorte une limitation de la portée de l'invention.

**BREVE DESCRIPTION DES DESSINS**

La **Figure 1** représente schématiquement un entraînement électrique général avec une machine électrique tournante alimentée par un onduleur muni de son unité de contrôle du type concerné par l'invention.

La **Figure 2** représente la structure générale de l'unité de contrôle montrée sur la **Figure 1.**

La **Figure 3** représente la structure générale d'un dispositif de commande à tolérance de panne selon l'invention pouvant remplacer avantageusement l'unité de contrôle de la **Figure 1.**

Les **Figures 4a et 4b** et les **Figures 5a et 5b** sont des comparaisons entre les estimations fournies par le procédé de commande à tolérance de panne selon l'invention et, respectivement, les vitesses de rotation et les positions angulaires réelles.

**DESCRIPTION DES MODES DE REALISATION PREFERES DE L'INVENTION**

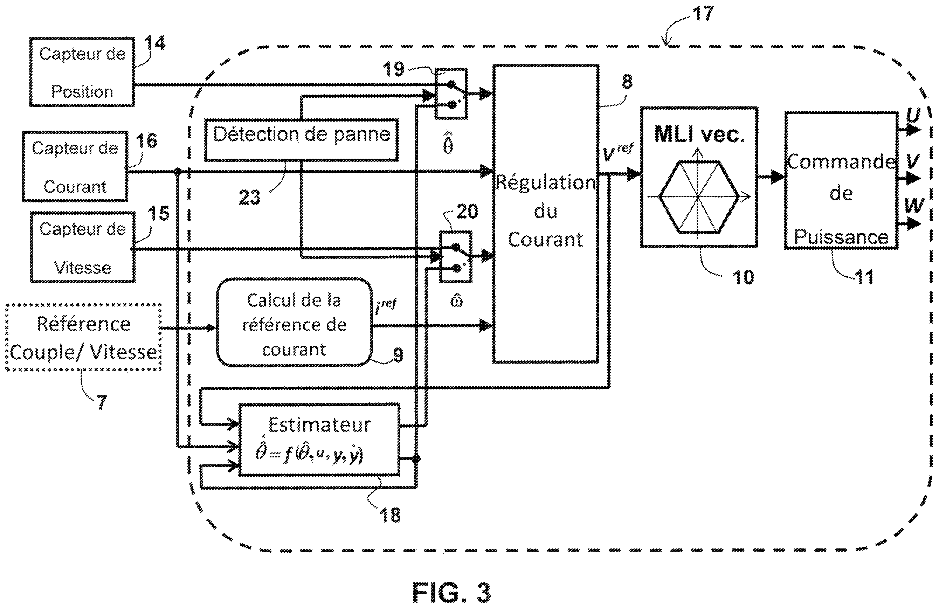

L'invention qui sera maintenant décrite en liaison avec la **Figure 3,** fournit une alternative aux mesures de position angulaire et de vitesse de rotation.

Le procédé de commande de l'onduleur 3 utilise les mesures des courants de phases 5 fournies par des capteurs de courant 16, la tension de référence $V^{ref}$ d'une MLI vectorielle 10, et les paramètres électriques de la machine 1 pour estimer la position angulaire $\theta$ et la vitesse de rotation $\omega$ quand le capteur de position angulaire 14 et le capteur de vitesse de rotation 15 sont défaillants.

Ces données en entrée utilisées par des premier et second estimateurs algébriques $\hat{\theta}, \hat{\omega}$ de la position angulaire $\theta$ et de la vitesse de rotation $\omega$, respectivement, sont communes à plusieurs estimateurs connus.

Cependant, l'invention présente une faible complexité algorithmique par contraste avec les autres procédés, qui ont un coût relativement élevé en puissance de calcul inadapté à des systèmes embarqués, et fournit des estimations pertinentes $\hat{\theta}, \hat{\omega}$ même dans le domaine des basses vitesses de rotation.

La **Figure 3** montre schématiquement, dans le cas d'une machine synchrone 1 triphasée, les principaux éléments du dispositif de commande à tolérance de panne 17 qui pilote l'électronique de puissance de l'onduleur 3 afin d'alimenter la machine 1 avec les tensions correctes correspondant aux consignes.

Comme dans l'implémentation classique de l'unité de contrôle 4 montrée sur la **Figure 2,** le but de ce dispositif de commande 17 est de permettre un fonctionnement avec un bon rendement dans une large gamme de couples et de vitesses; il reprend les éléments de base de l'unité de contrôle 4.

La régulation de courant 8 assure l'asservissement des courants de phases mesurés par les capteurs de courant 16 à une référence de courant $i^{ref}$.

Le bloc de calcul de la référence de courant 9 donne $i^{ref}$ à partir de la consigne 7 couple/ vitesse et des paramètres électriques de la machine 1.

Quand la tension de référence $V^{ref}$ a été calculée par le bloc de régulation de courant 8, le bloc de MLI vectorielle 10 génère les rapports cycliques devant être appliqués sur les bras de l'onduleur 3 à partir des composantes de la tension de référence $V^{ref}$ dans un repère de Clarke.

Ensuite, le bloc de commande de puissance 11 génère les signaux de commande *U, V, W* utilisés pour piloter l'onduleur 3.

En ce qui concerne la régulation de courant 8, puisque que l'on travaille avec un système triphasé dans les modes de réalisation préférés de l'invention, la commande peut être analysée comme précédemment dans plusieurs repères, au moyen des transformations de Clarke et de Park.

Le principal avantage de ces transformations est la réduction de l'ordre du système et un découplage de la commande.

Comme le montre bien la **Figure 3,** le dispositif de commande à tolérance de panne 17 selon l'invention comprend, en plus des éléments connus de l'unité de contrôle 4, un bloc d'estimation 18 du premier estimateur de la position angulaire $\hat{\theta}$ et du second estimateur de la vitesse de rotation $\hat{\omega}$.

Ce premier estimateur de la position angulaire $\hat{\theta}$ et ce second estimateur de la vitesse de rotation $\hat{\omega}$ sont fournis à la régulation de courant 8 par des sélecteurs 19, 20 quand le capteur de position 14 et le capteur de vitesse 15 sont défaillants et ne fournissent plus de mesures à la régulation de courant 8, ou que ces mesures apparaissent comme erronées, en offset ou amplitude. Un dispositif de détection de panne 23 est prévu pour détecter la défaillance des capteurs 14, 15.

On notera que l'estimation de la position angulaire $\theta$ et de la vitesse de rotation $\omega$ est faite à partir de la tension de référence $V^{ref}$ et des mesures des courants de phases 5 qui sont totalement décorrélées des mesures de position/vitesse 6. Ce point est essentiel pour la détection d'une défaillance et une reconfiguration.

Le procédé de commande à tolérance de panne selon l'invention est basé sur la mise en oeuvre d'une équation algébrique différentielle.

La caractéristique essentielle de cette approche, de manière générale, est qu' une grandeur z est dite "observable" par rapport à une autre grandeur w (qui est supposée être disponible dans un certain intervalle de temps), si chaque composante $z_i$ de z est une solution d'une équation algébrique dont les coefficients dépendent de w et d'un nombre fini de ses dérivées par rapport au temps, c'est-à-dire:

$$\forall i \in \{1,...,n\}, H_i(z_i, w, \dot{w},...) = 0$$

où $H_i$ est une équation polynomiale, et où le symbole $\cdot$ dénote un opérateur de dérivation par rapport au temps.

Cette équation définit la condition d'observabilité algébrique.

L'entité inventive a appliqué avec profit cette théorie à une modélisation d'une machine synchrone 1 triphasée à aimants permanents internes.

Une représentation d'état du modèle de machine synchrone 1 est utilisée avec les paramètres électriques suivants:

- des première et seconde inductances $L_d$, $L_q$ du stator dans le repère (d,q);
- une résistance $R_s$ des enroulements de phases du stator;
- un flux magnétique $\Phi_m$ produit par les aimants du rotor.

Les données d'entrée du calcul effectué par le bloc d'estimation 18 sont:

- les composantes de la tension de référence $V^{ref}$ dans un repère de Clarke $u = [u_1, u_2] = [v_{s\alpha}, v_{s\beta}]$;
- les projections des courants de phases 5 sur ce même repère de Clarke $y = [y_1, y_2] = [i_{s\alpha}, i_{s\beta}]$.

Les expressions des premier et second estimateurs sont alors obtenues comme une solution d'une équation algébrique différentielle dont les coefficients dépendent des paramètres électriques de la machine 1, de la tension de référence $V^{ref}$, des courants mesurés et de leurs dérivées premières par rapport au temps:

$$\begin{cases} \dot{\hat{\theta}} = \dfrac{\sin\hat{\theta}(L_q\,\dot{y}_1 + R_s\,y_1 - u_1) + \cos\hat{\theta}(-L_q\,\dot{y}_2 - R_s\,y_2 + u_2)}{\phi_m + (L_d - L_q)(y_1\cos\hat{\theta} + y_2\sin\hat{\theta})} \\[4mm] \dot{\hat{\omega}} = \dot{\hat{\theta}} \end{cases}$$

La valeur initiale $\theta_0$ du premier estimateur $\hat{\theta}$ est déterminée à partir de cette première expression en considérant que la vitesse de rotation $\omega$ est nulle à l'instant t=0:

$$\theta_0 = \arctan\left(\frac{R_s\,y_2 + L_q\,\dot{y}_2 - u_2}{R_s\,y_1 + L_q\,\dot{y}_1 - u_1}\right)\Bigg|_{t=0}$$

On notera que le calcul de $\dot{y}_1$, $\dot{y}_2$ peut être effectué à l'aide d'une approximation aux différences finies.

Plusieurs essais on été menés à bien par l'entité inventive dans le but de valider la précision des estimations.

Un premier essai a été réalisé sur un banc de faible puissance (approximativement 1,1 kW). La machine synchrone 1 utilisée avait une vitesse nominale de 2000 tr/mn et un couple initial de 1,5 Nm avec un rapport de saillance de 1,28. La machine 1 a été testée à la fois dans des conditions de charge et en l'absence de charge.

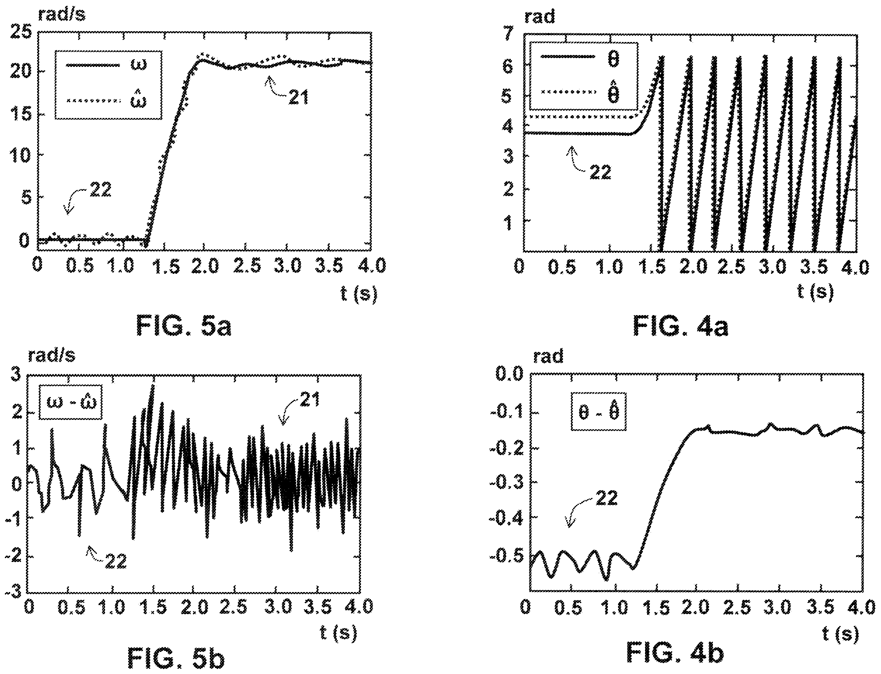

Les résultats expérimentaux dans le domaine des basses vitesses de rotation (jusqu'à 200 tr/mn) sont présentés sur les **Figures 4a, 4b, 5a et 5b.**

La **Figures 4a** montre l'évolution du premier estimateur en fonction du temps (en pointillé) et l'évolution de la vitesse de rotation mesurée (en trait plein). On constate que les deux courbes sont pratiquement superposées en régime permanent 21 après la phase transitoire 22.

La **Figure 4b,** qui montre l'erreur d'estimation, confirme ce fait puisque une première erreur est quasi nulle en régime permanent 21 et au maximum de 2,5% dans la phase transitoire 22.

En ce qui concerne le second estimateur, dont l'évolution en fonction du temps (en pointillé) est montrée sur la **Figure 5a,** un écart important de 0,53 rd par rapport à l'évolution de la position angulaire réelle (en trait plein) est à noter au démarrage 22. Comme le montre bien la **Figure 5b,** le second estimateur converge vers une valeur stable dès que le rotor commence à tourner, avec une seconde erreur faible de 0,15 rd.

Les oscillations à faible vitesse sont principalement dues à une faible précision des mesures de courants de phases 5.

Comme il va de soi, l'invention ne se limite pas aux seuls modes de réalisation préférentiels décrits ci-dessus.

Les modes de réalisation préférés du procédé et dispositif de commande à tolérance de panne selon l'invention décrits ci-dessus concernent une machine synchrone triphasée comportant un rotor à aimants permanents.

Le flux magnétique du rotor pourrait être également produit, tout ou en partie, par des bobinages rotoriques.

L'invention ne concerne pas non plus uniquement les machines triphasées 1.

Une modélisation d'une machine synchrone polyphasée 1, comportant un nombre phases supérieur à trois, par une équation algébrique différentielle pour construire des premier et second estimateurs de position/ vitesse permettrait de réaliser un autre dispositif de commande à tolérance de panne de l'onduleur 3 alimentant cette machine 1, qui présenterait les mêmes avantages que le dispositif de commande décrit ci-dessus.

Notamment, dans le cas d'une machine hexaphasée, de type double triphasée, dont on sait que l'analyse peut être décomposée en l'analyse de deux systèmes triphasés décalés, les premier et second estimateurs seraient similaires à ceux dont les expressions sont données ci-dessus pour une machine synchrone 1 triphasée.

Du fait de la faible complexité algorithmique du procédé de commande selon l'invention, celui-ci peut être aisément implémenté sous la forme d'instructions programmées ou micro-programmées dans une mémoire d'un microprocesseur ou d'un microcontrôleur.

L'invention embrasse donc toutes les variantes possibles de réalisation dans la mesure où ces variantes restent dans le cadre défini par les revendications ci-après.

**Revendications**

**1.** Procédé d'estimation de la position angulaire et/ou de la vitesse de rotation d'un rotor compris dans une machine électrique tournante synchrone polyphasée (1) comprenant également un stator, ladite machine étant alimentée à travers un onduleur polyphasé (3) relié à une source de tension continue (2), et ledit onduleur polyphasé (3) étant commandé de manière à être apte à appliquer (11) sur ledit stator une modulation de largeur d'impulsion vectorielle (10), ladite estimation de la position angulaire étant obtenue en calculant au moins un premier estimateur en tant que solution d'une équation algébrique différentielle dont des coefficients dépendent de paramètres électriques de ladite machine (1) comprenant des première et seconde inductances dudit stator respectivement selon un axe direct et un axe en quadrature par rapport à un flux magnétique produit par ledit rotor, une résistance d'un enroulement de phase et ledit flux magnétique produit par ledit rotor, et dépendent de plus d'une tension de référence de ladite modulation de largeur d'impulsion vectorielle (10), de courants de phases (5) et de dérivées premières par rapport au temps desdits courants de phases (5), et ladite estimation de la vitesse de rotation étant obtenue en calculant un second estimateur obtenu par un calcul de dérivée première dudit premier estimateur par rapport au temps ; **caractérisé en ce que** ladite équation algébrique différentielle s'écrit dans le cas où ladite machine électrique tournante synchrone polyphasée (1) est triphasée :

$$
\begin{cases}
\dot{\hat{\theta}} = \dfrac{\sin\hat{\theta}(L_q \dot{y}_1 + R_s y_1 - u_1) + \cos\hat{\theta}(-L_q \dot{y}_2 - R_s y_2 + u_2)}{\phi_m + (L_d - L_q)(y_1 \cos\hat{\theta} + y_2 \sin\hat{\theta})} \\[2em]
\hat{\omega} = \dot{\hat{\theta}}
\end{cases}
$$

où:

un opérateur de dérivation par rapport au temps est noté $\cdot$ ;
$\hat{\theta}, \hat{\omega}$ représentent respectivement lesdits premier et second estimateurs;
$u = [u_1, u_2] = [v_{s\alpha}, v_{s\beta}]$ représente des composantes de ladite tension de référence dans un repère de Clarke;
$y = [y_1, y_2] = [i_{s\alpha}, i_{s\beta}]$ représente des projections desdits courants de phases (5) sur ledit repère de Clarke;
$L_d, L_d$ représentent respectivement lesdites première et seconde inductances;
$R_s$ représente ladite résistance;
$\Phi_m$ représente ledit flux magnétique.

2. Procédé selon la revendication 1, **caractérisé en ce qu'**une valeur initiale dudit second estimateur est donnée par l'expression:

$$
\theta_0 = \arctan\left(\frac{R_s y_2 + L_q \dot{y}_2 - u_2}{R_s y_1 + L_q \dot{y}_1 - u_1}\right)\Bigg|_{t=0}
$$

3. Procédé de commande d'un onduleur polyphasé (3) destiné à alimenter à partir d'une source de tension continue (2) une machine électrique tournante synchrone polyphasée (1) comprenant un rotor et un stator, ledit procédé étant du type de ceux commandant ledit onduleur (3) en fonction au moins d'une position angulaire dudit rotor et/ou d'une vitesse de rotation de celui-ci, **caractérisé en ce que** ladite position angulaire et/ou ladite vitesse de rotation sont estimées en calculant des premier et second estimateurs conformément au procédé selon la revendication 1 ou 2.

4. Procédé de commande à tolérance de panne d'un onduleur polyphasé (3) destiné à alimenter à partir d'une source de tension continue (2) une machine électrique tournante synchrone polyphasée (1) comprenant un rotor, un stator, un capteur de position (14) déterminant une position angulaire dudit rotor et un capteur de vitesse (15) déterminant une vitesse de rotation dudit rotor, ledit procédé étant du type de ceux commandant ledit onduleur (3) en fonction au moins de ladite position angulaire et de ladite vitesse de rotation, **caractérisé en ce que** au moins un premier estimateur de ladite position angulaire et/ou un second estimateur de ladite vitesse de rotation sont calculés en cas de défaillance d'au moins un desdits capteurs (14, 15), lesdits premier et second estimateurs étant calculés conformément au procédé selon la revendication 1 ou 2.

**5.** Dispositif de commande à tolérance de panne (17) d'un onduleur polyphasé (3) destiné à alimenter à partir d'une source de tension continue (2) une machine électrique tournante synchrone polyphasée (1) pour la mise en oeuvre du procédé selon la revendication 4, ledit dispositif comprenant un rotor, un stator, un capteur de position (14) fournissant une position angulaire dudit rotor et/ou un capteur de vitesse (15) fournissant une vitesse de rotation dudit rotor, du type de ceux comprenant:

- des premiers moyens d'acquisition (6) de ladite position angulaire;
- des deuxièmes moyens d'acquisition (6) de ladite vitesse de rotation;
- des troisièmes moyens d'acquisition (5) de courants de phases;
- des moyens d'estimation (18) d'un premier estimateur de ladite position et/ou d'un second estimateur de ladite vitesse de rotation calculés conformément au procédé selon la revendication 1 ou 2;
- des moyens de détection (23) d'une première défaillance dudit capteur de position (14) et/ ou d'une seconde défaillance dudit capteur de vitesse (15); et
- des moyens de remplacement (19, 20) de ladite position angulaire par ledit premier estimateur et/ou de ladite vitesse de rotation par ledit second estimateur en cas de détection d'une première et/ou d'une seconde défaillance par lesdits moyens de détection (23).

**6.** Dispositif de commande à tolérance de panne (17) d'un onduleur polyphasé (3) selon la revendication 5, **caractérisé en ce que** lesdits moyens d'estimation (18) comprennent:

- des moyens de mémorisation de paramètres électriques de ladite machine (1);
- des moyens de résolution d'une équation algébrique différentielle dudit premier estimateur;
- des moyens de différentiation dudit premier estimateur.

**7.** Dispositif de commande à tolérance de panne (17) d'un onduleur polyphasé (3) selon la revendication 5 ou 6, **caractérisé en ce qu'**il comprend de plus:

- un régulateur de courant (8) générant une tension de référence en fonction d'une consigne de courant en étant relié aux premiers, deuxièmes et troisièmes moyens d'acquisition (5, 6) ou, alternativement, aux moyens de remplacement (19, 20) et audits troisièmes moyens d'acquisition (5);
- un générateur de signaux (10) commandé par ledit régulateur de courant (8) et implémentant une stratégie de modulation en largeur d'impulsion vectorielle.

**8.** Machine électrique tournante synchrone polyphasée (1), **caractérisée en ce qu'**elle comporte un onduleur muni du dispositif de commande à tolérance de panne (17) d'un onduleur polyphasé (3) selon l'une quelconque des revendications 5 à 7 précédentes.

**9.** Mémoire informatique, **caractérisée en ce qu'**elle comporte des codes informatiques pour l'exécution des étapes du procédé de commande d'un onduleur polyphasé (3) selon la revendication 3.

**Patentansprüche**

**1.** Verfahren zur Schätzung der Winkelposition und/oder der Drehzahl eines Rotors, der in einer mehrphasigen synchronen rotierenden elektrischen Maschine (1) enthalten ist, die außerdem einen Stator umfasst, wobei die Maschine über einen mehrphasigen Wechselrichter (3) gespeist wird, der mit einer Gleichspannungsquelle (2) verbunden ist, und der mehrphasige Wechselrichter (3) so gesteuert wird, dass er in der Lage ist, auf den Stator eine vektorielle Pulsweitenmodulation (10) anzuwenden (11), wobei die Schätzung der Winkelposition erhalten wird, indem wenigstens eine erste Schätzfunktion als Lösung einer algebraischen Differentialgleichung berechnet wird, in welcher Koeffizienten von elektrischen Parametern der Maschine (1) abhängen, welche eine erste und eine zweite Induktivität des Stators in einer direkten Achse bzw. einer Quadraturachse bezüglich eines von dem Rotor erzeugten Magnetflusses, einen Widerstand einer Phasenwicklung und den von dem Rotor erzeugten Magnetfluss umfassen, und außerdem von einer Referenzspannung der vektoriellen Pulsweitenmodulation (10), von Phasenströmen (5) und von ersten Ableitungen dieser Phasenströme (5) nach der Zeit abhängen, und wobei die Schätzung der Drehzahl erhalten wird, indem eine zweite Schätzfunktion berechnet wird, die durch eine Berechnung der ersten Ableitung der ersten Schätzfunktion nach der Zeit erhalten wird; **dadurch gekennzeichnet, dass** die algebraische Differentialgleichung in dem Fall, in dem die mehrphasige synchrone rotierende elektrische Maschine (1) dreiphasig ist, die Form

$$\begin{cases} \dot{\hat{\theta}} = \dfrac{\sin\hat{\theta}(L_q\dot{y}_1 + R_s y_1 - u_1) + \cos\hat{\theta}(-L_q\dot{y}_2 - R_s y_2 + u_2)}{\phi_m + (L_d - L_q)(y_1\cos\hat{\theta} + y_2\sin\hat{\theta})} \\[4mm] \hat{\omega} = \dot{\hat{\theta}} \end{cases}$$

hat, wobei:

ein Zeitableitungsoperator mit $\cdot$ bezeichnet ist;
$\hat{\theta}, \hat{\omega}$ die erste bzw. zweite Schätzfunktion darstellen;
$u = [u_1, u_2] = [v_{s\alpha}, v_{s\beta}]$ Komponenten der Referenzspannung in einem Clarke-Koordinatensystem darstellt;
$y = [y_1, y_2] = [i_{s\alpha}, i_{s\beta}]$ Projektionen der Phasenströme (5) auf das Clarke-Koordinatensystem darstellt;
$L_d, L_d$ die erste bzw. zweite Induktivität darstellen;
$R_s$ den Widerstand darstellt;
$\Phi_m$ den Magnetfluss darstellt.

2. Verfahren nach Anspruch 1, **dadurch gekennzeichnet, dass** ein Anfangswert der zweiten Schätzfunktion durch folgenden Ausdruck gegeben ist:

$$\theta_0 \;=\; \arctan\!\left(\frac{R_s y_2 + L_q\dot{y}_2 - u_2}{R_s y_1 + L_q\dot{y}_1 - u_1}\right)\bigg|_{t=0}$$

3. Verfahren zur Steuerung eines mehrphasigen Wechselrichters (3), der dazu bestimmt ist, aus einer Gleichspannungsquelle (2) eine mehrphasige synchrone rotierende elektrische Maschine (1) zu speisen, die einen Rotor und einen Stator umfasst, wobei das Verfahren von dem Typ ist, bei dem der Wechselrichter (3) in Abhängigkeit von wenigstens einer Winkelposition des Rotors und/oder einer Drehzahl desselben gesteuert wird, **dadurch gekennzeichnet, dass** die Winkelposition und/oder die Drehzahl geschätzt werden, indem eine erste und eine zweite Schätzfunktion gemäß dem Verfahren nach Anspruch 1 oder 2 berechnet werden.

4. Verfahren zur fehlertoleranten Steuerung eines mehrphasigen Wechselrichters (3), der dazu bestimmt ist, aus einer Gleichspannungsquelle (2) eine mehrphasige synchrone rotierende elektrische Maschine (1) zu speisen, die einen Rotor, einen Stator, einen Positionssensor (14), der eine Winkelposition des Rotors bestimmt, und einen Drehzahlsensor (15), der eine Drehzahl des Rotors bestimmt, umfasst, wobei das Verfahren von dem Typ ist, bei dem der Wechselrichter (3) in Abhängigkeit von wenigstens der Winkelposition und der Drehzahl gesteuert wird, **dadurch gekennzeichnet, dass** im Falle eines Ausfalls wenigstens eines der Sensoren (14, 15) wenigstens eine erste Schätzfunktion der Winkelposition und/oder eine zweite Schätzfunktion der Drehzahl berechnet werden, wobei die erste und die zweite Schätzfunktion gemäß dem Verfahren nach Anspruch 1 oder 2 berechnet werden.

5. Vorrichtung zur fehlertoleranten Steuerung (17) eines mehrphasigen Wechselrichters (3), der dazu bestimmt ist, aus einer Gleichspannungsquelle (2) eine mehrphasige synchrone rotierende elektrische Maschine (1) zu speisen, zur Durchführung des Verfahrens nach Anspruch 4, wobei die Vorrichtung einen Rotor, einen Stator, einen Positionssensor (14), der eine Winkelposition des Rotors liefert, und/oder einen Drehzahlsensor (15), der eine Drehzahl des Rotors liefert, umfasst, des Typs, welcher umfasst:

- erste Mittel zur Erfassung (6) der Winkelposition;
- zweite Mittel zur Erfassung (6) der Drehzahl;
- dritte Mittel zur Erfassung (5) von Phasenströmen;
- Mittel zur Schätzung (18) einer ersten Schätzfunktion der Position und/oder einer zweiten Schätzfunktion der Drehzahl, die gemäß dem Verfahren nach Anspruch 1 oder 2 berechnet werden;
- Mittel zur Erkennung (23) eines ersten Ausfalls des Positionssensors (14) und/oder eines zweiten Ausfalls des Drehzahlsensors (15); und
- Mittel zum Ersetzen (19, 20) der Winkelposition durch die erste Schätzfunktion und/oder der Drehzahl durch die zweite Schätzfunktion im Falle einer Erkennung eines ersten und/oder eines zweiten Ausfalls durch die Mittel zur Erkennung (23).

6.  Vorrichtung zur fehlertoleranten Steuerung (17) eines mehrphasigen Wechselrichters (3) nach Anspruch 5, **dadurch gekennzeichnet, dass** die Mittel zur Schätzung (18) umfassen:

    - Mittel zur Speicherung elektrischer Parameter der Maschine (1);
    - Mittel zur Lösung einer algebraischen Differentialgleichung der ersten Schätzfunktion;
    - Mittel zur Differenzierung der ersten Schätzfunktion.

7.  Vorrichtung zur fehlertoleranten Steuerung (17) eines mehrphasigen Wechselrichters (3) nach Anspruch 5 oder 6, **dadurch gekennzeichnet, dass** sie außerdem umfasst:

    - einen Stromregler (8), der eine Referenzspannung in Abhängigkeit von einem Stromsollwert erzeugt, wobei er mit den ersten, zweiten und dritten Mitteln zur Erfassung (5, 6) oder, alternativ dazu, mit den Mitteln zum Ersetzen (19, 20) und mit den dritten Mitteln zur Erfassung (5) verbunden ist;
    - einen Signalgenerator (10), der von dem Stromregler (8) gesteuert wird und eine Strategie der vektoriellen Pulsweitenmodulation implementiert.

8.  Mehrphasige synchrone rotierende elektrische Maschine (1), **dadurch gekennzeichnet, dass** sie einen Wechselrichter umfasst, der mit der Vorrichtung zur fehlertoleranten Steuerung (17) eines mehrphasigen Wechselrichters (3) nach einem der vorhergehenden Ansprüche 5 bis 7 ausgestattet ist.

9.  Computerspeicher, **dadurch gekennzeichnet, dass** er Computercodes zur Ausführung der Schritte des Verfahrens zur Steuerung eines mehrphasigen Wechselrichters (3) nach Anspruch 3 umfasst.

**Claims**

1.  Method for the estimation of the angular position and/or speed of rotation of a rotor in a synchronous polyphase rotating electric machine (1), which also comprises a stator, wherein said machine is supplied via a polyphase inverter (3) which is connected to a DC voltage source (2), and wherein said polyphase inverter (3) is controlled for the application (11) to said stator of a vectoral pulse width modulation (10), wherein said estimation of the angular position is obtained by the calculation of at least a first estimator, as the solution of a differential algebraic equation, the coefficients of which are dependent upon electrical parameters of said machine (1), comprising the first and second inductances of said stator, in the direct-axis and quadrature-axis respectively in relation to a magnetic flux generated by said rotor, a resistance of a phase winding, and said magnetic flux generated by said rotor, and are further dependent upon a reference voltage of said vectoral pulse width modulation (10), phase currents (5) and first derivatives with respect to the time of said phase currents (5), and said estimation of the speed of rotation is obtained by the calculation of a second estimator, which is obtained by the calculation of a first derivative of said first estimator in relation to time;
    **characterized in that** said differential algebraic equation is expressed as follows, where said synchronous polyphase rotating electric machine (1) is of the three-phase type:

$$\begin{cases} \dot{\hat{\theta}} = \dfrac{\sin\hat{\theta}(L_q\,\dot{y}_1 + R_s\,y_1 - u_1) + \cos\hat{\theta}(-L_q\,\dot{y}_2 - R_s\,y_2 + u_2)}{\phi_m + (L_d - L_q)(y_1\cos\hat{\theta} + y_2\sin\hat{\theta})} \\[2em] \hat{\omega} = \dot{\hat{\theta}} \end{cases}$$

where:

a derivative operator in relation to time is marked: $\dot{}$;
$\hat{\theta}, \hat{\omega}$ represent said first and second estimators respectively;
$u = [u_1, u_2] = [v_{s\alpha}, v_{s\beta}]$ represent the components of said reference voltage, according to a Clarke coordinate;
$y = [y_1, y_2] = [i_{s\alpha}, i_{s\beta}]$ represent the projections of said phase currents (5) on said Clarke coordinate;
$L_d, L_d$ represent said first and second inductances respectively;
$R_s$ represents said resistance;
$\Phi_m$ represents said magnetic flux.

2. Method according to Claim 1, **characterized in that** an initial value of said second estimator is given by the expression:

$$\theta_0 = \arctan\left(\frac{R_s y_2 + L_q \dot{y}_2 - u_2}{R_s y_1 + L_q \dot{y}_1 - u_1}\right)\Big|_{t=0}$$

3. Method for the control of a polyphase inverter (3) which is designed to supply, from a DC voltage source (2), a synchronous polyphase rotating electric machine (1) comprising a rotor and a stator, wherein said method is of the type whereby said inverter (3) is controlled as a function of at least one angular position of said rotor and/or of a speed of rotation of the latter, **characterized in that** said angular position and/or said speed of rotation are estimated by the calculation of the first and second estimators, in accordance with the method according to Claim 1 or 2.

4. Method for the fault-tolerant control of a polyphase inverter (3) which is designed to supply, from a DC voltage source (2), a synchronous polyphase rotating electric machine (1) comprising a rotor, a stator, a positional sensor (14) for the determination of an angular position of said rotor, and a speed sensor (15) for the determination of a speed of rotation of said rotor, wherein said method is of the type whereby said inverter (3) is controlled as a function of at least said angular position and of said speed of rotation, **characterized in that** at least a first estimator of said angular position and/or a second estimator of said speed of rotation are calculated in the event of the failure of at least one of said sensors (14, 15), wherein said first and second estimators are calculated in accordance with the method according to Claim 1 or 2.

5. Fault-tolerant control device (17) for a polyphase inverter (3) which is designed to supply, from a DC voltage source (2), a synchronous polyphase rotating electric machine (1), for the deployment of the method according to Claim 4, wherein said device comprises a rotor, a stator, a positional sensor (14) for the detection of an angular position of said rotor and/or a speed sensor (15) for the detection of a speed of rotation of said rotor, of the type comprising:

   - first means of acquisition (6) for said angular position;
   - second means of acquisition (6) for said speed of rotation;
   - third means of acquisition (5) for phase currents;
   - means for the estimation (18) of a first estimator of said position and/or of a second estimator of said speed of rotation, calculated in accordance with the method according to Claims 1 or 2;
   - means for the detection (23) of a first failure of said positional sensor (14) and/or of a second failure of said speed sensor (15); and
   - means for the replacement (19, 20) of said angular position by said first estimator and/or of said speed of rotation by said second estimator, in the event of the detection of a first and/or of a second failure by said means of detection (23).

6. Fault-tolerant control device (17) for a polyphase inverter (3) according to Claim 5, **characterized in that** said means of estimation (18) comprise:

   - means for the memorization of electrical parameters of said machine (1);
   - means for the resolution of a differential algebraic equation for said first estimator;
   - means for the differentiation of said first estimator.

7. Fault-tolerant control device (17) for a polyphase inverter (3) according to Claim 5 or 6, **characterized in that** it further comprises:

   - a current regulator (8) for the generation of a reference voltage as a function of a setpoint current, and connected to the first, second and third means of acquisition (5, 6) or, alternatively, to the means of replacement (19, 20) and to said third means of acquisition (5);
   - a signal generator (10) controlled by said current regulator (8), for the deployment of a vectoral pulse width modulation strategy.

8. Synchronous polyphase rotating electric machine (1), **characterized in that** it comprises an inverter equipped with a fault-tolerant control device (17) for a polyphase inverter (3), according to one of the preceding Claims 5 to 7.

9. Computer memory, **characterized in that** it comprises computer codes for the execution of steps in the method for the control of a polyphase inverter (3) according to Claim 3.

FIG. 1    (Etat de la technique)

EP 2 997 654 B1

FIG. 2 (Etat de la technique)

FIG. 3

EP 2 997 654 B1

FIG. 5a

FIG. 4a

FIG. 5b

FIG. 4b

EP 2 997 654 B1

**EP 2 997 654 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5569994 A

- US 7002318 B

**Littérature non-brevet citée dans la description**

- **CHEN J-L et al.** *Design and implementation of a novel high-performance sensorless control system for interior permanent magnet synchronous motors*